# EUROPÄISCHE PATENTANMELDUNG

(11) **EP 0 824 973 A2**
(43) Veröffentlichungstag der Anmeldung: **25.02.1998**
(21) Anmeldenummer: 97113599.1
(22) Anmeldetag: 06.08.1997
(51) Int. Cl.: B08B 3/02, F01N 3/00

(54) **Verfahren und Einrichtung zum Reinigen eines verunreinigten Gegenstands**

(30) Priorität: 19.08.1996 DE 19633400
(71) Anmelder: SIEMENS AKTIENGESELLSCHAFT, 80333 München (DE)
(72) Erfinder: Spielmann, Horst, Dipl.-Ing., 91083 Baiersdorf (DE); Hums, Erich, Dr., 91093 Hessdorf (DE)

(57) **Zusammenfassung**

Verfahren und Einrichtung (2) dienen zum Reinigen eines Gegenstands (4) mit einer Mehrzahl von durchgehenden Hohlräumen (6), die Verunreinigungen aufweisen. Die Einrichtung (2) besitzt eine Trageinrichtung (12; 44) und/oder einen Behälter (38) zur Aufnahme des zu reinigenden Gegenstands (4), eine Zuführvorrichtung (14; 14a, 14b) zum Zuführen einer Reinigungs-Flüssigkeit (W) zum Gegenstand (4), sobald dieser Gegenstand (4) auf der Trageinrichtung (12, 44) und/oder im Behälter (38) angeordnet ist, gegebenenfalls eine Zufuhr- und/oder eine Abfuhrvorrichtung (10; 44, 46) für den Gegenstand (4) zur bzw. von der Tragvorrichtung (12; 44) und/oder zum bzw. von dem Behälter (38), und einen Auffangbehälter (22; 54) zum Auffangen der verunreinigten Reinigungs-Flüssigkeit (W'). Bevorzugt ist vorgesehen, daß die Zuführvorrichtung (14; 14a, 14b) mindestens eine Düse (16, 18; 56, 60) aufweist, relativ zu der der der Gegenstand (4) bevorzugt in linearer Richtung oder mäanderförmig bewegbar ist.

## Beschreibung

Die Erfindung bezieht sich auf ein Verfahren und eine Einrichtung zum Reinigen eines Gegenstands mit einer Mehrzahl von durchgehenden Hohlräumen, die Verunreinigungen aufweisen.

Auf dem Gebiet der Reinigung stellt die Sauberhaltung oder das Saubermachen eines Gegenstands mit einer Vielzahl von durchgehenden Kanälen ein besonderes Problem dar. Solche Kanäle können beispielsweise eng aneinander liegen und einen rechteckigen oder bienenwabenförmigen Querschnitt aufweisen. Von Bedeutung ist, daß die Reinigung schnell, kostengünstig und mit vertretbarem Arbeitsaufwand erfolgt.

Aufgabe der Erfindung ist es demnach, ein Verfahren und eine Einrichtung zum Reinigen eines Gegenstands, der eine Vielzahl von Kanälen besitzt, anzugeben, das besonders günstig durchzuführen bzw. mit relativ einfachen Mitteln aufzubauen ist.

Diese Aufgabe wird gemäß der Erfindung bezüglich des Verfahrens dadurch gelöst, daß der Gegenstand mit einer Reinigungs-Flüssigkeit, insbesondere mit Wasser, bespritzt wird, und daß die dabei entstehende verunreinigte Reinigungs-Flüssigkeit aufgefangen wird.

Eine bevorzugte Weiterbildung geht davon aus, daß die Hohlräume des verunreinigten Gegenstands Kanäle sind, die beispielsweise einen rechteckigen oder bienenwabenförmigen Querschnitt aufweisen. Bei dieser Weiterbildung ist vorgesehen, daß der Gegenstand gleichzeitig oder nacheinander von beiden Seiten mit der Reinigungsflüssigkeit bespritzt wird.

Von Vorteil ist es, die einzelnen Hohlräume nacheinander mit einem Flüssigkeits-Strahl zu bespritzen oder auszuspülen. Um dies zu erreichen, ist gemäß einer bevorzugten Fortbildung vorgesehen, daß der Gegenstand oder eine Zuführ-Vorrichtung für die Reinigungsflüssigkeit beim Spritzen bewegt wird. Hierbei kann es sich um eine lineare oder eine mäanderförmige Bewegung handeln. Natürlich kann alternativ die Zuführvorrichtung für die Reinigungs-Flüssigkeit beim Ausspritzen auch in einem solchen Abstand vom Gegenstand entfernt gehalten sein, daß sie gleichmäßig alle Hohlräume bespritzt. Sie muß dann nicht bewegt werden und kann fixiert angeordnet sein.

Um den Gegenstand von beiden Seiten bespritzen zu können, ist es angebracht, den Gegenstand um 180° beim gesamten Säuberungsprozeß zu wenden.

Im Sinne einer Geringhaltung der Umweltbelastung ist weiterhin vorgesehen, die verunreinigte Reinigungsflüssigkeit abzuziehen und aufzubereiten.

Prinzipiell kann man den einzelnen Gegenstand vom Ort seines bestimmungsgemäßen Gebrauchs zu einem anderen Ort transportieren, wo die eigentliche Reinigung stattfindet. Gemäß einer vorteilhaften Ausbildung ist jedoch vorgesehen, daß das Abspritzen am Ort des eingebauten Gegenstands vorgenommen wird.

Von Vorzug ist es auch, wenn mehrere Gegenstände im Durchlaufverfahren nacheinander bespritzt werden.

Die genannte Aufgabe bezuglich der Einrichtung wird erfindungsgemäß dadurch gelost, daß eine Einrichtung vorgesehen ist, die gekennzeichnet ist durch eine Trageinrichtung und/oder einen Behälter zur Aufnahme des zu reinigenden Gegenstands, eine Zuführvorrichtung zum Zuführen einer Reinigungsflüssigkeit zum Gegenstand, sobald dieser Gegenstand auf der Trageinrichtung und/oder im Behälter angeordnet ist, gegebenenfalls eine Zufuhr- und/oder eine Abfuhrvorrichtung für den Gegenstand zur bzw. von der Tragvorrichtung und/oder zum bzw. von dem Behälter, und einen Auffangbehälter zum Auffangen der verunreinigten Reinigungsflüssigkeit.

Weitere vorteilhafte Ausgestaltungen der Einrichtung sind in den Unteransprüchen gekennzeichnet.

Es hat sich herausgestellt, daß überraschenderweise gebrauchte SCR-Katalysatoren, die für DeNOx-Zwecke oder für Di-oxin-Beseitigung im Rauchgas von Kraftwerken oder Müllverbrennungsanlagen eingesetzt werden, weitgehend dadurch regeneriert werden können, daß sie mit Wasser abgespritzt, in Kontakt gebracht und damit gereinigt werden. Dieses Absprühen mit Wasser (heißes Wasser oder Sattdampf) ist besonders einfach und besonders kostengünstig. Die so gereinigten Katalysatoren nehmen wieder eine hohe Aktivität an. Zur weiteren Verbesserung des Reinigungserfolgs können dem Wasser Additive beigefügt werden. Solche Additive werden so ausgewählt, daß sie selektiv auf gewisse Ablagerungen chemisch einwirken. Die Anwendung des voranstehend beschriebenen Verfahrens und der voranstehenden Einrichtung auf diesen Anwendungsfall der SCR-Katalysatoren ist besonders bevorzugt.

Dabei kann die genannte Einrichtung ortsfest aufgebaut werden und zum Einsatz in einem Regenerationszentrum kommen. Alternativ kann es sich auch um eine mobile Einheit handeln, die an unterschiedlichen Standorten zum Einsatz kommt. Auch kann die Einrichtung ortsfest an einem Kraftwerk oder einer Müllverbrennungsanlage angeordnet und dort ein integraler Bestandteil des DeNOx-Reaktors sein.

Ausführungsbeispiele der Erfindung werden im folgenden anhand von vier Figuren näher erläutert. Es zeigen:
- FIG 1: eine erste Reinigungs-Einrichtung mit Greif-, Transport- und Wende-Einrichtung für die einzelnen Gegenstände,
- FIG 2: eine zweite Reinigungs-Einrichtung, die als Mobil-Einrichtung ausgeführt sein kann, mit rasterförmigem Abspritzen der einzelnen Gegenstände,
- FIG 3: eine dritte Reinigungs-Einrichtung, die mit Bespritzen von oben und unten und im Durchlaufverfahren arbeitet, und
- FIG 4: eine vierte Reinigungs-Einrichtung, die integriert ist in den DeNOx-Reaktor eines Kraftwerks oder einer Müllverbrennungsanlage.

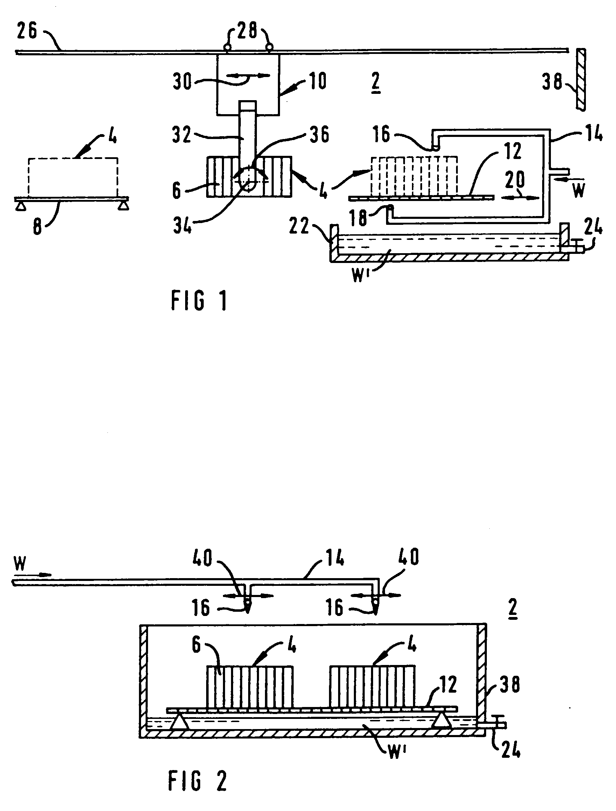

Gemäß Figur 1 ist eine Reinigungs-Einrichtung 2 vorgesehen, die zur Reinigung eines Gegenstands 4 dient. Dieser Gegenstand 4 ist quaderförmig ausgebildet und besitzt eine Vielzahl von durchgehenden Hohlräumen 6 von rechteckigem oder bienenwabenförmigem Querschnitt, welche verunreinigt sind. Der Gegenstand 4 kann von einer Laderampe 8, auf der er nochmals gestrichelt dargestellt ist, mittels einer Greif-, Transport- und Wendeeinrichtung 10 einer Trageinrichtung 12, beispielsweise in Form eines Siebes, zugeführt werden. Der zu reinigende Gegenstand 4 kann auf dieser Trageinrichtung 12 abgesetzt werden. Assoziiert mit der Trageinrichtung 12 ist eine Zuführvorrichtung 14 zum Zuführen einer Reinigungs-Flüssigkeit W, die beispielsweise Wasser sein kann. Die Zuführvorrichtung 14 besitzt einen oberen Teil mit einer Düse 16 und einen unteren Teil mit einer Düse 18, die in Richtung auf den Gegenstand 4 und dabei in Richtung auf die Eintrittsöffnungen der einzelnen Kanäle gerichtet sind. Damit beim Flüssigkeits-Austritt alle Kanäle erreicht werden, ist hier die Trageinrichtung 12 linear oder mäanderförmig horizontal bewegbar. Dies ist durch einen Doppelpfeil 20 symbolisiert.

Unterhalb der Trageinrichtung 12 befindet sich ein Auffangbehälter 22 zum Auffangen der verunreinigten Reinigungs-Flüssigkeit W'. Der Auffangbehälter 22 ist mit einem Ablaufventil 24 zum Ablassen der verunreinigten Reinigungs-Flüssigkeit W' versehen.

Die Greif-, Transport- und Wendeeinrichtung 10 ist auf Schienen 26 aufgehängt. Sie ist mittels Rollen 28 horizontal bewegbar, was durch einen Doppelpfeil 30 verdeutlicht ist. Mittels zweier paralleler Arme 32 kann der Gegenstand 4 vorsichtig gegriffen werden. Diese Arme 32 sind so ausgestaltet, daß der Gegenstand 4 um 180° um eine horizontale Achse 34 gedreht werden kann. Die Drehung ist durch einen gekrümmten Doppelpfeil 36 veranschaulicht. Auf diese Weise ist es möglich, den Gegenstand 4 von beiden Seiten mittels der Düsen 16, 18 zu bespritzen, zu besprühen, zu kontaktieren oder auf andere Weise mit Druck zu beaufschlagen und damit zu reinigen.

Alternativ ist es bei der Einrichtung 2 von Figur 1 natürlich auch möglich, anstelle der Trageinrichtung 12 beim Bespritzen die Zuführvorrichtung 14 hin- und herzubewegen. Auch kann die gesamte Einrichtung 2 oder auch nur ein Teil davon in einem Behälter 38 untergebracht sein, von dem lediglich eine Seitenwand gezeigt ist.

Bei der in Figur 2 dargestellten Reinigungs-Einrichtung 2 ist ein vollständiger Behälter 38 gezeigt. Dieser nimmt die Trageinrichtung 12, wiederum in Form eines Siebes, sowie zwei Gegenstände 4 auf. Mittel zum Einbringen der Gegenstände 4 in den Behälter 38 sind nicht gezeigt. Bei dieser Ausführung können die beiden Gegenstände 4 von oben mit Hilfe mindestens zweier Düsen 16 abgespritzt und damit gereinigt werden.

Zwecks rasterförmiger Bewegung der Düsen 16 ist eine Linearbewegung der Zuführvorrichtung 14 für die Reinigungs-Flüssigkeit W vorgesehen. Dies ist durch Doppelpfeile 40 verdeutlicht. Anzumerken ist hier, daß die Anordnung natürlich auch so getroffen werden kann, daß die beiden Gegenstände 4 unabhängig voneinander von oben und/oder von unten besprüht oder abgespritzt werden können.

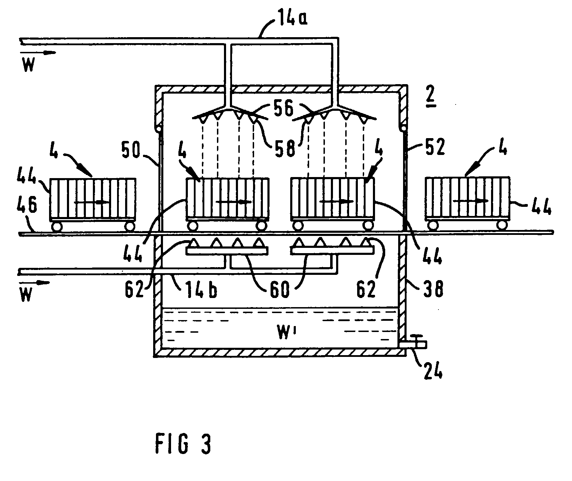

Nach Figur 3 ist eine Reinigungs-Einrichtung 2 vorgesehen, die im Durchlaufverfahren arbeitet. Mit anderen Worten: Hier kann eine ganze Anzahl von Gegenständen 4 nacheinander auf Transportwagen 44, die auf Schienen 46 laufen, durch die Reinigungs-Einrichtung 2 gefahren werden. Diese Reinigungs-Einrichtung 2 umfaßt ein Gehäuse 38, das weitgehend geschlossen ist. Es ist mit einer Eingangsschleuse 50 und einer Ausgangsschleuse 52 zum Eintritt bzw. zum Austritt der einzelnen Wagen 44 versehen. Die Gegenstände 4 sind auf den Wagen 44 so angeordnet, daß die Längskanäle wieder vertikal stehen. Der untere Teil des Gehäuses 38 wirkt als Auffang-Behälter 54 für die verunreinigte Reinigungs-Flüssigkeit W'. Hier befindet sich ebenfalls ein Ablauf-Ventil 24.

Zum Bespritzen sind hier eine erste und eine zweite Zuführeinrichtung 14a bzw. 14b für die Reinigungs-Flüssigkeit W vorgesehen. Diese Zuführeinrichtungen 14a, 14b sind vorligend als Rohrsystem mit endseitigem Verteilersystem 56 mit Sprühdüsen 58 sowie mit endseitigem Verteilersystem 60 mit Sprühdüsen 62 in Form linearer oder kreisförmiger Anordnungen vorgesehen. Die erste Zuführeinrichtung 14a befindet sich oberhalb und die zweite Zuführeinrichtung 14b befindet sich unterhalb der Schienen 46, so daß ein Bespritzen der Körper 4 von oben und von unten möglich ist. Das im unteren Teil 54 aufgefangene Waschwasser W' wird einer (nicht dargestellten) Wasseraufbereitungs-Anlage zugeführt. Hier kann die Abtrennung und Entsorgung der verschiedenen Waschwasser-Inhaltstoffe vorgenommen werden.

Von besonderer Bedeutung ist, daß die einzelnen Gegenstände 4 Katalysator-Module sein können, die nach einigem Gebrauch der Rauchgas-Reinigungsanlage einer Müllverbrennungsanlage oder einem Kraftwerk entnommen sind. Hierbei handelt es sich insbesondere um Katalysator-Module, die zur Stickoxid- oder Dioxin-Beseitigung in diesen Anlagen eingesetzt werden. Solche Katalysatoren, die nach dem bekannten SCR-Verfahren arbeiten, setzen sich nach einiger Zeit zu. Es hat sich gezeigt, daß ein einfaches Ausspritzen der Katalysator-Kanäle mit normalem Wasser ausreicht, um diese weitgehend von Verschmutzungen zu reinigen, die abgelagerten Verunreinigungen weitgehend zu lösen und den betreffenden Katalysatoren einen Großteil ihrer ursprünglichen DeNOx- bzw. Dioxin-Aktivität zurückzugeben. Von Vorteil ist es dennoch, dem Wasser (heißes Wasser, Sattdampf) mindestens ein Additiv zuzusetzen, das lösend wirkt. Dieses Additiv kann dabei auf eine vorgegebene Komponente der Verunreinigungen, wie z.B. Kaliumoxid (K₂O), Natriumoxid (Na₂O), Calciumoxid (CaO) oder andere Alkali- oder Erdalkali-Verbindungen oder auch Bleioxid (PbO) sowie andere lösbare Schwermetallverbindungen, selektiv einwirken. Beim chemischen Einwirken soll vermieden werden, daß die aktiven Katalysatorbestandteile chemisch angegriffen werden. Als Additiv eignen sich z.B. im Wasser lösliche Substanzen wie Oxalsäure, Zitronensäure, Milchsäure etc. oder Mischungen daraus. Auch sind Mineralsäuren geeignet, wie z.B. schwefelige Säure (H₂SO₃), salpetrige Säure (HNO₂) oder Mischungen daraus. Auch Wasserstoffperoxid (H₂O₂) kann hier eingesetzt werden. Die genannten Substanzen sind in Wasser löslich. Sie nehmen auf das Löseverhalten der Verunreinigungen in den Katalysatorkanälen selektiv Einfluß.

Für die obengenannten Zwecke kann insbesondere eine mobile Reinigungseinrichtung 2 eingesetzt werden, die zur Müllverbrennungs-Anlage bzw. zum Kraftwerk transportiert wird und dort zur Katalysator-Reinigung mittels Spritzwasser (gegebenenfalls mit Additiv) eingesetzt wird. Eine solche Einheit ist verfahrbar aufgebaut und kann möglichst nahe an die eingebauten Katalysatoren herangefahren werden.

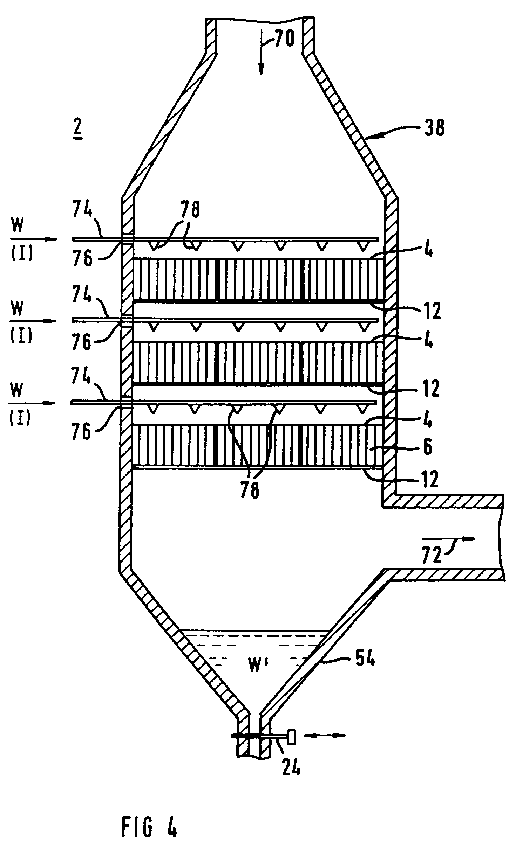

In Figur 4 ist eine Ausführungsform dargestellt, bei der von einem stationären und integrierten Aufbau der Reinigungs-Einrichtung 2 Gebrauch gemacht wird. Hier sind die einzelnen Gegenstände 4 wiederum Katalysator-Module; in diesem Ausführungsbeispiel sind die Gegenstände 4 jedoch bei der Reinigung ortsfest. Wie in Figur 4 gezeigt, sind die einzelnen Gegenstände 4 in verschiedenen (hier in drei) Ebenen, die voneinander beabstandet sind, auf Trageinrichtungen 12 in einem Behälter 38 untergebracht, der auf diesem Arbeitsgebiet als Reaktor bezeichnet wird. Im Betrieb des Reaktors 38 wird Rauchgas aus einem Kessel von oben durch die einzelnen Ebenen der Module 4 geleitet und anschließend unten seitwärts einem Kamin zugeführt. Dies ist durch Pfeile 70, 72 veranschaulicht. Dabei setzt sich im Reaktor 38 Staub ab, der sich in einem unteren Teil, Staubtrichter oder Auffangbehälter 54 sammelt.

Aus Figur 4 geht hervor, daß im Normalbetrieb zwischen den einzelnen Ebenen jeweils ein Rußbläser 74 angeordnet sein oder eingefahren werden kann. Auch oberhalb der obersten Ebene kann ein solcher Rußbläser 74 vorgesehen sein. Die Einführöffnungen sind mit 76 bezeichnet. Bei diesen Rußbläsern 74 handelt es sich um Rohrgestelle mit nach unten gerichteten Düsen 78, aus denen zum Abblasen von abgesetztem Ruß oder anderen Staubbestandteilen überhitzter Dampf herausgeblasen wird, und zwar in Richtung auf die Oberflächen der einzelnen Module 4 in Richtung des Rauchgasstroms. Der überhitzte Dampf sorgt dabei für das mechanische Abtragen der Staub- und Rußpartikel. Ein chemischer Prozeß ist damit nicht verbunden.

Wie in Figur 4 dargestellt, werden die einzelnen, ohnehin vorhandenen Rußbläser 74 vorliegend mit einer Reinigungs-Flüssigkeit W im voranstehend geschilderten Sinne beaufschlagt. Hierbei kann es sich also insbesondere um Sattdampf handeln, dem mindestens ein Additiv beigesetzt ist. Die Verteilung der einzelnen Düsen 78 sorgt dafür, daß eine gleichmäßige Beaufschlagung aller Kanäle 6 der Module 4 erfolgt. Dadurch setzt neben einer mechanischen auch eine chemische Reinigung ein. Denn die im Wasser gelösten Substanzen des Additivs tragen hier entscheidend zu einer Beseitigung lösbarer Substanzen bei. Durch diese Vorgehensweise werden die in den einzelnen Katalysator-Modulen 4 enthaltenen Komponenten, wie z.B. Vanadium, Wolfram, Molybdän und andere Komponenten, kaum abgetragen. Die sich im Auffangbehälter 54 absetzende verunreinigte Reinigungs-Flüssigkeit W' kann mit Hilfe eines Schiebers, Sperrglieds oder Ventils 24 nach unten abgelassen werden.

Alternativ können anstelle der eingezeichneten Rußbläser 74 beim Reinigungsvorgang auch speziell angepaßte Zuführvorrichtungen 14 zum Zuführen der Reinigungs-Flüssigkeit W eingesetzt werden. Dabei können die Einführöffnungen 76 mitbenutzt werden. Auch dabei kann wieder Sattdampf mit Additiven zum selektiven Lösen von Verunreinigungen und Ablagerungen eingesetzt werden.

Der Vorteil der in Figur 4 gezeigten Einrichtung 2 besteht darin, daß kein Ausbau der einzelnen Module 4 erforderlich ist. Auch ist ein Bewegen der Module 4, das stets mit einem Beschädigungsrisiko verbunden ist, nicht erforderlich.

Nun kann es prinzipiell geschehen, daß im Laufe zumeist mehrerer Reinigungsvorgänge die einzelnen Katalysator-Module 4 leicht geschädigt werden, nämlich daß auf chemische Weise die Oberfläche leicht angegriffen wird. Dies würde zu einer Reduzierung der katalytischen Aktivität führen. Um hierfür Abhilfe zu schaffen, ist vorgesehen, daß auf demselben Wege wie beim Reinigen eine Imprägnierung erfolgt.Dies führt wieder zu einer Erhöhung der katalytischen Aktivität. Bei diesem Imprägnieren wird der Verlust an ausgewaschenen oder chemisch abgetragenen katalytischen Wirkkomponenten ersetzt. Mit anderen Worten: Bei diesem Vorgang wird eine der katalytisch aktiven Komponenten (bei den üblichen Katalysatoren Wolfram, Vanadium und/oder Molybdän) in Form einer löslichen Verbindung in die einzelnen Kanäle 6 eingeführt, so daß sich diese Substanzen dort absetzen können. Dem Benetzen der einzelnen Oberflächen in den Kanälen schließt sich ein Trocknen an. Dieses Trocknen kann beispielsweise durch Einleitung von heißem Rauchgas geschehen. Es kann auch sein, daß das Rauchgas ohnehin eine oder mehrere der in den Katalysator-Modulen enthaltene katalytische Komponenten mit sich führt. Dann würde es ausreichen, eine gewisse Zeit lang das Rauchgas über die Module 4 zu leiten, um eine Kompensation des durch die chemische Reaktion verursachten katalytischen Aktivitätsverlustes zu erreichen.

## Patentansprüche

1. Verfahren zum Reinigen eines Gegenstands (4) mit einer Mehrzahl von durchgehenden Hohlräumen (6), die Verunreinigungen aufweisen,
**dadurch gekennzeichnet,** daß der Gegenstand (4) mit einer Reinigungs-Flüssigkeit (W), insbesondere mit Wasser, bespritzt wird, und daß die dabei entstehende verunreinigte Reinigungs-Flüssigkeit (W') aufgefangen wird.

2. Verfahren nach Anspruch 1, wobei die Hohlräume (6) des verunreinigten Gegenstands (4) Kanäle sind, die bevorzugt einen rechteckigen oder bienenwabenförmigen Querschnitt aufweisen,
**dadurch gekennzeichnet,** daß der Gegenstand (4) gleichzeitig oder nacheinander von beiden Seiten mit der Reinigungsflüssigkeit (W) bespritzt wird.

3. Verfahren nach Anspruch 1 oder 2,
**dadurch gekennzeichnet,** daß der Gegenstand (4) oder eine Zuführvorrichtung (14) für die Reinigungs-Flüssigkeit (W) beim Bespritzen bewegt wird, so daß die einzelnen Hohlräume (6) nacheinander bespritzt werden.

4. Verfahren nach Anspruch 2 oder 3,
**dadurch gekennzeichnet,** daß der Gegenstand (4) zum Bespritzen von beiden Seiten um 180° gewendet wird.

5. Verfahren nach einem der Ansprüche 1 bis 4,
**dadurch gekennzeichnet,** daß die verunreinigte Reinigungs-Flüssigkeit (W') abgezogen und aufbereitet wird.

6. Verfahren nach einem der Ansprüche 1 bis 5,
**dadurch gekennzeichnet,** daß das Abspritzen am Ort des eingebauten Gegenstands (4) vorgenommen wird.

7. Verfahren nach einem der Ansprüche 1 bis 6,
**dadurch gekennzeichnet,** daß mehrere Gegenstände (4) im Durchlaufverfahren nacheinander bespritzt werden.

8. Einrichtung (2) zum Reinigen eines Gegenstands (4) mit einer Mehrzahl von durchgehenden Hohlräumen (6), die Verunreinigungen aufweisen, insbesondere zur Durchführung des Verfahrens nach einem der Ansprüche 1 bis 7,
**gekennzeichnet durch** eine Trageinrichtung (12; 44) und/oder einen Behälter (38) zur Aufnahme des zu reinigenden Gegenstands (4), eine Zuführvorrichtung (14; 14a, 14b) zum Zuführen einer Reinigungs-Flüssigkeit (W) zum Gegenstand (4), sobald dieser Gegenstand (4) auf der Trageinrichtung (12, 44) und/oder im Behälter (38) angeordnet ist, gegebenenfalls eine Zufuhr- und/oder eine Abfuhrvorrichtung (10; 44, 46) für den Gegenstand (4) zur bzw. von der Tragvorrichtung (12; 44) und/oder zum bzw. von dem Behälter (38), und einen Auffangbehälter (22; 54) zum Auffangen der verunreinigten Reinigungs-Flüssigkeit (W').

9. Einrichtung (2) nach Anspruch 8,
**dadurch gekennzeichnet,** daß die Zuführvorrichtung (14; 14a, 14b) mindestens eine Düse (16, 18; 56, 60) aufweist, relativ zu der der Gegenstand (4) bevorzugt in linearer Richtung oder mäanderförmig bewegbar ist.

10. Einrichtung (2) nach Anspruch 8,
**dadurch gekennzeichnet,** daß die Zuführvorrichtung (14; 14a, 14b) mindestens eine Düse (16, 18; 56, 60) aufweist, relativ zu der der Gegenstand (4) ortsfest angeordnet ist.

11. Einrichtung (2) nach Anspruch 8, 9 oder 10,
**dadurch gekennzeichnet,** daß der Gegenstand (4) um 180° drehbar ist, so daß er von beiden Seiten von der Zuführvorrichtung (14; 14a, 14b) mit der Reinigungs-Flüssigkeit (W) bespritzbar ist.

12. Einrichtung (2) nach einem der Ansprüche 8 bis 11,
**dadurch gekennzeichnet,** daß außerhalb des Behälters (38) eine Laderampe (8) vorgesehen ist.

13. Einrichtung (2) nach einem der Ansprüche 8 bis 12,
**gekennzeichnet durch** Transportmittel (10; 44) zum Bewegen des Gegenstands (4) in dem Behälter (38).

14. Einrichtung (2) nach einem der Ansprüche 8 bis 13,
**dadurch gekennzeichnet,** daß die Trageinrichtung (12, 44) im Behälter (38) untergebracht oder Bestandteil dieses Behälters (38) ist.

15. Einrichtung (2) nach einem der Ansprüche 8 bis 14,
**dadurch gekennzeichnet,** daß die Zuführvorrichtung (14; 14a; 74) eine Austrittsdüse (16, 58; 78) aufweist, die oberhalb des Gegenstands (4) im Behälter (38) angeordnet ist.

16. Einrichtung (2) nach einem der Ansprüche 8 bis 15,
**dadurch gekennzeichnet,** daß die Zuführvorrichtung (14) ein ohnehin vorhandener Rußbläser (74) ist.

17. Einrichtung (2) nach einem der Ansprüche 8 bis 16,
**dadurch gekennzeichnet,** daß der Gegenstand (4) ein SCR-Katalysator und die Reinigungs-Flüssigkeit (W) Wasser oder Wasserdampf, vorzugsweise mit einem Überdruck bis zu 5 bar, ist.

18. Einrichtung (2) nach einem der Ansprüche 8 bis 17,
**dadurch gekennzeichnet,** daß die Reinigungs-Flüssigkeit (W) Wasser ist, dem wenigstens ein Additiv beigefügt ist, das mindestens auf eine der Verunreinigungen lösend wirkt.

19. Einrichtung (2) nach Anspruch 18,
**dadurch gekennzeichnet,** daß das Additiv a) eine niedermolekulare organische Säure, wie z.B. Oxalsäure, Zitronensäure, Milchsäure oder eine Mischung daraus, b) eine Mineralsäure, wie z.B. Schwefelige Säure, Salpetrige Säure, Salpetersäure oder eine Mischung daraus, oder aber c) Wasserstoffperoxid ist.

20. Einrichtung (2) nach einem der Ansprüche 8 bis 19,
**dadurch gekennzeichnet,** daß Mittel vorgesehen sind, um dem Gegenstand (4) nach dem Reinigen ein Imprägnierungsmittel (I) zuzuführen.

21. Verfahren nach einem der Ansprüche 1 bis 7,
**dadurch gekennzeichnet,** daß der Gegenstand (4) ein SCR-Katalysator und die Reinigungs-Flüssigkeit (W) Wasser oder Wasserdampf, vorzugsweise mit einem Überdruck bis zu 5 bar, ist.

22. Verfahren nach einem der Ansprüche 1 bis 7 oder 21,
**dadurch gekennzeichnet,** daß die Reinigungs-Flüssigkeit (W) Wasser ist, dem wenigstens ein Additiv beigefügt ist, das mindestens auf eine der Verunreinigungen lösend wirkt.

23. Verfahren nach Anspruch 22,
**dadurch gekennzeichnet,** daß das Additiv a) eine niedermolekulare organische Säure, wie z.B. Oxalsäure, Zitronensäure, Milchsäure oder eine Mischung daraus, b) eine Mineralsäure, wie z.B. Schwefelige Säure, Salpetrige Säure, Salpetersäure oder eine Mischung daraus, oder aber c) Wasserstoffperoxid ist.

24. Verfahren nach einem der Ansprüche 1 bis 7 oder 21 bis 23, **dadurch gekennzeichnet,** daß der Gegenstand (4) nach dem Reinigen imprägniert wird.
